# DEMANDE DE BREVET EUROPEEN

(11) **EP 0 858 140 A1**
(43) Date de publication de la demande: **12.08.1998**
(21) Numéro de dépôt: 98410004.0
(22) Date de dépôt: 27.01.1998
(51) Int. Cl.: H02B 13/035

(54) **Disjoncteur à haute tension et à enveloppe métallique renfermant deux chambres de coupure par pôle**

(30) Priorité: 04.02.1997 FR 9701452
(71) Demandeur: SCHNEIDER ELECTRIC SA, 92100 Boulogne Billancourt (FR)
(72) Inventeur: Tanimura, Ken-ichi, 38050 Grenoble cedex 09 (FR)
(74) Mandataire: Ritzenthaler, Jacques

(57) **Abrégé**

Un disjoncteur à haute tension est logé dans une enveloppe métallique étanche remplie de gaz isolant à rigidité diélectrique élevée, notamment de l'hexafluorure de soufre, ladite enveloppe 30 étant au potentiel de la masse, et renfermant deux chambres de coupure CH1, CH2 connectés électriquement en série au niveau de chaque pôle par une connexion série CE interne. Les deux chambres de coupure CH1, CH2 sont disposées côte à côte en étant alignées le long d'un plan diamétral transversal dans lequel se trouve la connexion série CE. L'enveloppe 30 cylindrique comporte une pluralité de brides 36, 38, 40, 42 avec diverses possibilités de raccordement électrique El, E2, S1, S2 au moyen de conducteurs de raccordement CR1 à CR8 internes reliés aux bornes des chambres de coupure CH1, CH2 à l'opposé de ladite liaison série CE, les conducteurs de raccordement CR1 à CR8 étant situés dans un plan médian longitudinal agencé entre les chambres de coupure CH1, CH2.

## Description

L'invention est relative à un disjoncteur à haute tension logé dans une enveloppe métallique étanche remplie de gaz isolant à rigidité diélectrique élevée, notamment de l'hexafluorure de soufre, ladite enveloppe étant au potentiel de la masse, et renfermant deux chambres de coupure connectés électriquement en série au niveau de chaque pôle par une connexion série interne.

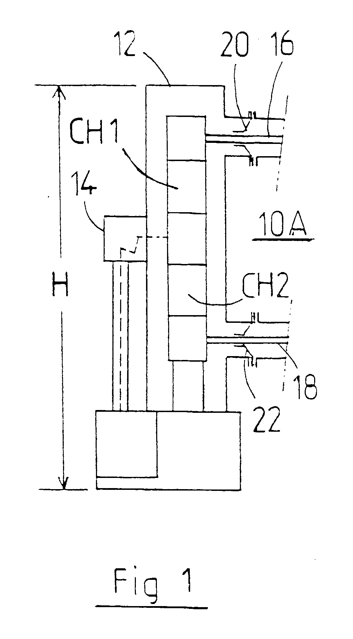

Pour augmenter le pouvoir de coupure, et s'adapter à la tension de service du réseau, il est classique de faire usage de disjoncteurs ayant plusieurs chambres de coupure connectées électriquement en série au niveau de chaque pôle ou travée. Les figures 1 à 6 montrent l'état de la technique correspondant avec deux chambres de coupure par pôle.

Sur la figure 1, un disjoncteur 10A d'un poste blindé à haute tension comporte une enveloppe 12 métallique reliée au potentiel de la masse, et remplie par un gaz isolant à rigidité diélectrique élevée, par exemple de l'hexafluorure de soufre SF6. L'enveloppe 12 du disjoncteur 10 renferme deux chambres de coupure CH1, CH2, empilées l'une sur l'autre dans le sens de la hauteur et connectées en série dans la zone médiane. Chaque chambre de coupure CH1, CH2 est dotée d'une paire de contacts séparables (non représentés) et d'un dispositif d'extinction d'arc (non représenté). Les contacts mobiles des deux chambres de coupure CH1, CH2 sont actionnés par un mécanisme de commande 14 disposé latéralement par rapport à l'enveloppe 12. La hauteur H du poste est élevée, étant donné que les deux chambres CH1, CH2 s'étendent verticalement l'une sur l'autre en étant raccordées à des conducteurs de raccordement 16,18 supportés par des isolateurs 20,22.

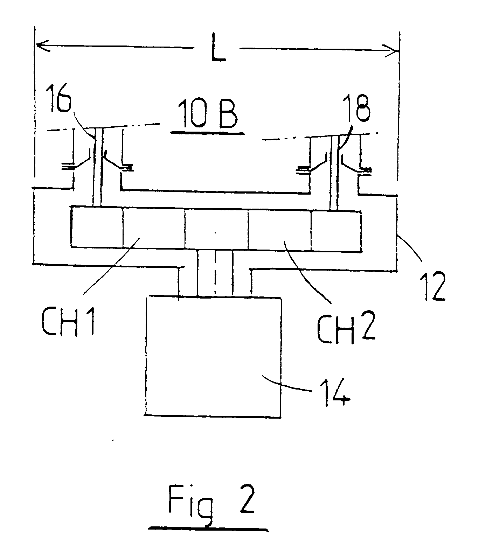

En référence à la figure 2, les deux chambres de coupure CH1, CH2 du disjoncteur 10B sont alignées dans le sens horizontal, et connectées en série dans la zone médiane. Le mécanisme de commande 14 est situé sous l'enveloppe 12. La longueur du disjoncteur 10B correspond à plus du double de la longueur élémentaire de chaque chambre de coupure 12,14, ce qui nécessite un encombrement longitudinal important de l'enveloppe 12.

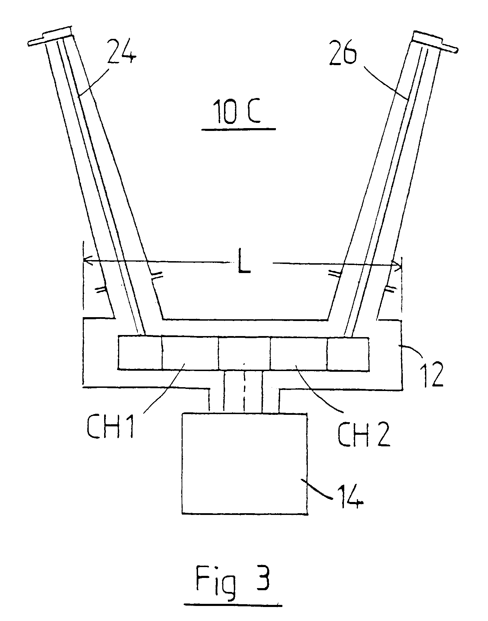

La figure 3 montre la même disposition horizontale des chambres de coupure CH1, CH2, mais appliquée à un disjoncteur 10C du type ouvert à traversées 24,26. L'encombrement dans le sens de la longueur L correspond à celui de la figure 2.

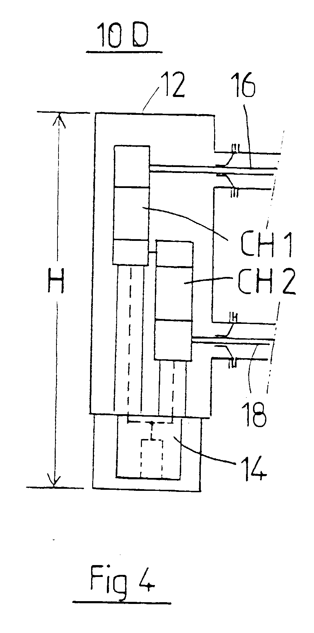

En référence à la figure 4, on a déjà proposé de réduire l'encombrement H dans le sens de la hauteur en décalant les deux chambres de coupure CH1, CH2 en largeur, mais en conservant la liaison électrique dans la zone médiane. La hauteur H du disjoncteur 10D reste néanmoins importante pour un poste souterrain ou installé dans un bâtiment.

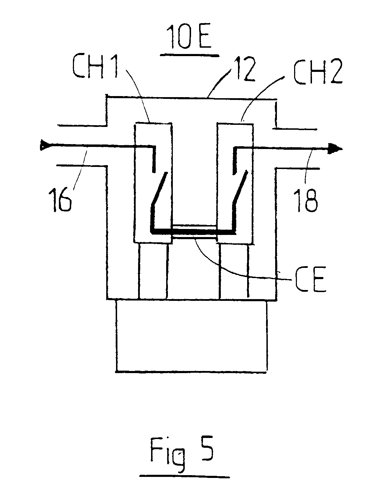

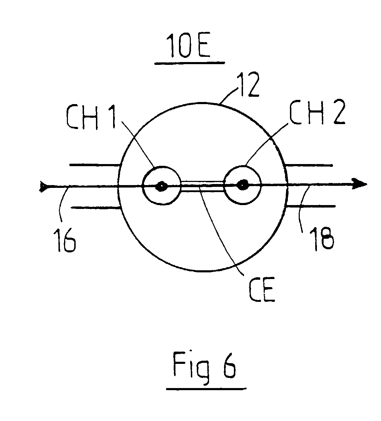

Selon le disjoncteur 10E des figures 5 et 6, les deux chambres de coupure CH1, CH2 sont disposées côte à côte dans un plan diamétral de l'enveloppe 12 métallique. La connexion électrique CE en série des deux chambres CH1, CH2, et les deux conducteurs de raccordement 16,18 sont agencés dans le même plan diamétral. La tenue diélectrique d'un tel disjoncteur 10E nécessite une enveloppe 12 cylindrique avec un diamètre important.

L'encombrement important en hauteur et en longueur des disjoncteurs connus 10A à 10E des figures 1 à 6 nécessite d'autre part un démontage partiel des unités ou parties actives du poste pour le transport. Le montage final du poste doit être réalisé sur site, et nécessite des précautions particulières pour empêcher toute introduction de particules extérieures dans l'enveloppe risquant d'affecter la tenue diélectrique lors du fonctionnement normal du poste.

L'objet de l'invention consiste à réduire l'encombrement de l'enveloppe d'un disjoncteur à haute tension renfermant deux chambres de coupure par pôle, de manière à obtenir un poste compact pouvant être transporté sur site sans démontage des parties actives.

Le disjoncteur selon l'invention est caractérisé en ce que les deux chambres de coupure sont disposées côte à côte en étant alignées le long d'un plan diamétral transversal dans lequel se trouve la connexion série, et que l'enveloppe cylindrique comporte une pluralité de brides avec diverses possibilités de raccordement électrique au moyen de conducteurs de raccordement internes reliés aux bornes des chambres de coupure à l'opposé de ladite liaison série, les conducteurs de raccordement étant situés dans un plan médian longitudinal agencé entre les chambres de coupure.

L'un au moins des conducteurs de raccordement est disposé au voisinage d'un élément métallique soumis à la différence de potentiel entre les deux chambres de coupure, la distance d'isolement entre ledit conducteur et l'élément métallique étant inférieure à la distance séparant lesdites chambres de coupure. Un tel agencement permet d'obtenir un disjoncteur blindé compact contenu dans une enveloppe métallique ayant un encombrement minimum dans le sens de la hauteur, et un diamètre optimal en fonction de la tension du réseau. Les dimensions réduites de l'enveloppe du disjoncteur permettent de l'utiliser avantageusement dans des postes souterrains, et dans un bâtiment. Le transport d'une travée peut être effectué sans démontage des parties actives, ce qui facilite les opérations d'installation sur site.

La compacité du disjoncteur selon l'invention autorise d'autre part une bonne tenue mécanique contre les séismes.

Le choix des points de raccordement pour l'entrée et la sortie du disjoncteur facilite la mise en service en fonction de l'installation.

Selon un mode de réalisation préférentiel, l'élément métallique est formé par un condensateur de répartition du potentiel, lequel est branché en parallèle aux bornes de la chambre de coupure correspondante.

Selon un développement de l'invention, l'élément métallique est formé par une chambre auxiliaire à insertion de résistances lors de la fermeture, et connectée en parallèle aux bornes de la chambre de coupure correspondante.

Les chambres de coupure et/ou les chambres auxiliaires prennent appui individuellement sur des isolateurs supports fixés à la base et à l'intérieur de l'enveloppe.

Les chambres de coupure peuvent être positionnées verticalement ou horizontalement à l'intérieur de l'enveloppe métallique.

D'autres avantages et caractéristiques ressortiront plus clairement de la description qui va suivre de plusieurs modes de réalisation de l'invention, donnés à titre d'exemples non limitatifs, et représentés aux dessins annexés dans lesquels:
- les figures 1 à 5 montrent différents types de disjoncteurs connus représentant l'état de la technique;
- la figure 6 est une vue en plan du disjoncteur selon la figure 5;
- la figure 7 est une vue schématique en élévation du disjoncteur selon l'invention;
- la figure 8 représente une vue en coupe selon la ligne 8-8 de la figure 7;
- la figure 9 montre une vue de détail du mécanisme de commande du disjoncteur de la figure 7;
- les figures 10A, 10B et 10C sont des schémas électriques du disjoncteur de la figure 7, pour différents modes de connexion;
- les figures 11, 12, 13 représentent à échelle réduite le disjoncteur de la figure 7 pour différents modes de connexion;
- la figure 14 est une vue identique de la figure 7 d'une variante de réalisation;
- la figure 15 est une vue en coupe selon la ligne 15-15 de la figure 14;
- la figure 16 représente une vue en détail du mécanisme de commande du disjoncteur de la figure 14;
- la figure 17 est un schéma électrique du disjoncteur de la figure 14;
- les figures 18 et 19 sont des vues identiques des figures 14 et 15 d'une variante de réalisation;
- la figure 20 montre une vue en élévation d'une autre variante de réalisation;
- la figure 21 est une vue de profil de l'intérieur du disjoncteur de la figure 20.

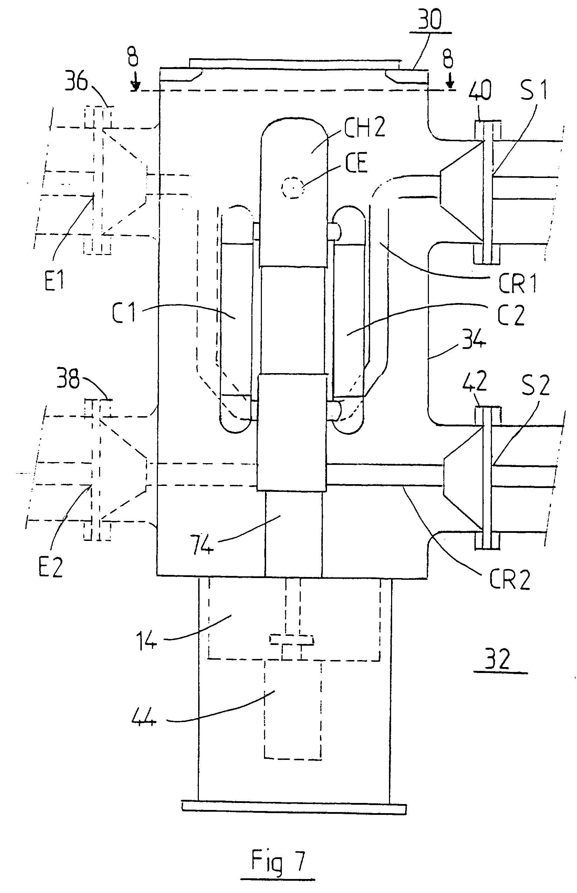

En référence aux figures 7 à 9, l'enveloppe 30 métallique d'un disjoncteur 32 blindé à haute tension comporte une cuve 34 étanche remplie de gaz isolant SF6, et ayant quatre brides de raccordement 36, 38, 40, 42. La cuve 34 cylindrique est au potentiel de la masse, et renferme deux chambres de coupure CH1, CH2 connectées électriquement en série, avec quatres possibilités de raccordement E1, E2, S1, S2 au niveau des brides 36, 38, 40, 42. Les deux chambres de coupure CH1, CH2 sont alignées le long du plan médian transversal de l'enveloppe 30 cylindrique, et la connexion série CE interne se trouve dans le même plan diamétral.

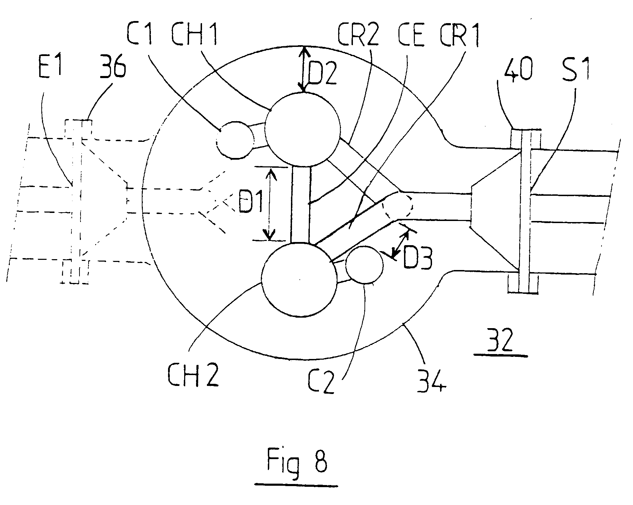

La connexion série CE s'étend perpendiculairement entre les deux chambres de coupure CH1, CH2, et est horizontale dans le cas de chambres de coupure CH1, CH2 disposées verticalement. Elle peut être située à la partie supérieure des chambres de coupure CH1, CH2 (cas des figures 7 et 8), ou à la partie inférieure, en fonction du mode de connexion avec les points de raccordement E1, E2, S1, S2.

A partir d'une certaine valeur de la tension du réseau, un condensateur C1, C2 de répartition de la tension peut être connecté en parallèle aux bornes de chaque chambre de coupure CH1, CH2. Les condensateurs C1, C2 de formes cylindriques s'étendent à l'intérieur de l'enveloppe 30 selon une direction parallèle aux chambres de coupure CH1, CH2.

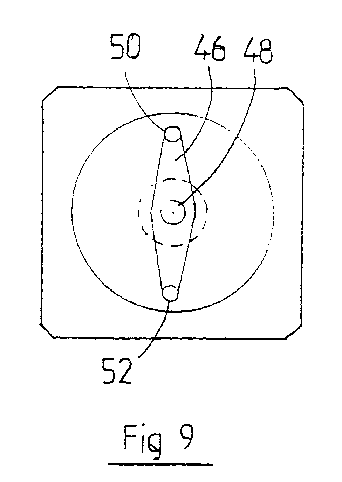

Les contacts mobiles des chambres de coupure CH1, CH2 sont actionnés par un mécanisme de commande 14 à vérin 44 situé sous la cuve 34 de l'enveloppe 34. Le mécanisme de commande 14 comporte un palonnier 46 actionné par la tige 48 du vérin 44, et solidarisé à deux bielles 50,52 isolantes accouplées aux contacts mobiles (figure 9) des chambres de coupure CH1, CH2.

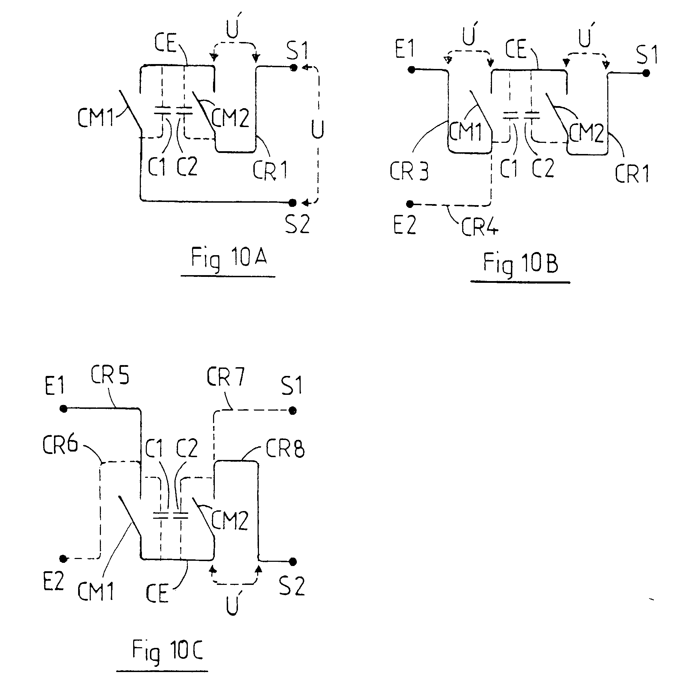

Dans l'exemple du mode de connexion en C des figures 7 et 8, le point de raccordement supérieur S1 est relié à l'intérieur de la cuve 34 à la borne inférieure de la chambre de coupure CH2 par un premier conducteur de raccordement CR1. L'autre point de raccordement S2 est branché à la borne inférieure de la chambre de coupure CH1 par un deuxième conducteur de raccordement CR2. Les bornes supérieures des deux chambres de coupure CH1, CH2 sont interconnectées par la connexion série CE. Le schéma électrique de ce mode de connexion en C est représenté sur la figure 10A, dans lequel CM1 et CM2 désignent les contacts mobiles respectifs des chambres de coupure CH1, CH2.

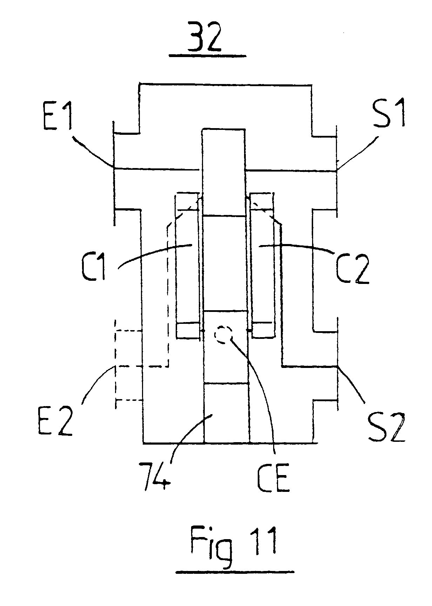

Les autres modes de connexion interne des chambres de coupures CH1, CH2 sont représentés en pointillé sur les figures 7 et 8, et certains exemples spécifiques sont illustrés sur les figures 11 à 13.

La distance D1 (figure 8) de séparation entre les deux chambres de coupure CH1 et CH2 tient compte de la tension nominale U entre les points de raccordement S1, S2 correspondant à l'entrée et à la sortie du disjoncteur 32. La distance d'isolement D2 entre l'une des chambres de coupure CH1, CH2 et la cuve 34 doit être adaptée à la tension entre la phase et la masse. Le premier conducteur de raccordement CR1 comprend une portion intermédiaire rectiligne s'étendant le long du condensateur C2. Il suffit d'une distance d'isolement D3 réduite entre le conducteur CR1 et le condensateur C2, étant donné que la tension nominale U' entre eux représente une fraction de la tension nominale U (U' est sensiblement égale à la moitié de la tension U).

La figure 10B montre une variante du mode de connexion interne de la figure 10A. Le premier conducteur de raccordement CR1 entre le point S1 et la borne inférieure de la chambre de coupure CH2 est supprimé, et la borne inférieure de la chambre de coupure CH1 est reliée soit au point de raccordement supérieur El par un troisième conducteur de raccordement CR3, soit au point de raccordement inférieur E2 par un quatrième conducteur de raccordement CR4 (en pointillé).

Dans l'exemple de la figure 10C, la connexion série CE interne des deux chambres de coupure CH1, CH2 shunte les bornes inférieures, tandis que les bornes supérieures des chambres sont reliées respectivement aux points de raccordement E1 ou E2; S1 ou S2 par d'autres conducteurs de raccordement CR5, CR6; CR7, CR8.

Il est ainsi possible d'obtenir différents modes de connexion interne en Z, S, X ou Y, avec une connexion série CE amont ou aval, et en choisissant l'entrée et la sortie parmi les quatre points de raccordement E1, E2, S1, S2. La répartition des conducteurs de raccordement CR1 à CR8 à l'intérieur de la cuve 34 du disjoncteur 32 est agencée pour obtenir un encombrement minimum en hauteur et en diamètre de l'enveloppe 30, indépendamment du mode de connexion des deux chambres de coupure CH1, CH2. L'ensemble des conducteurs de raccordement CR1 à CR8 est situé sensiblement dans le plan médian longitudinal s'étendant perpendiculairement au plan médian transversal d'alignement des chambres de coupure CH1, CH2.

La figure 11 représente le disjoncteur 32 avec un mode de connexion E1, S1, S2 de la figure 10C et à connexion série CE aval, utilisant les conducteurs de raccordement CR5, CR7, CR8. Le point de raccordement E1 pourrait être remplacé par E2 après remplacement du conducteur de raccordement CR5 par CR6.

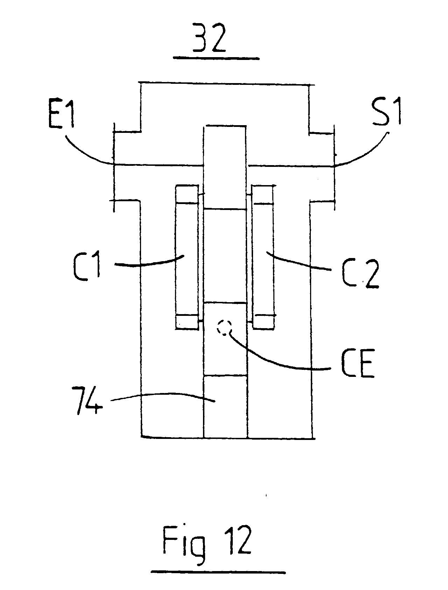

La figure 12 représente le disjoncteur 32 avec un mode de connexion linéaire E1, S1 de la figure 10C, et à connexion série CE aval, utilisant les conducteurs de raccordement CR5, CR7.

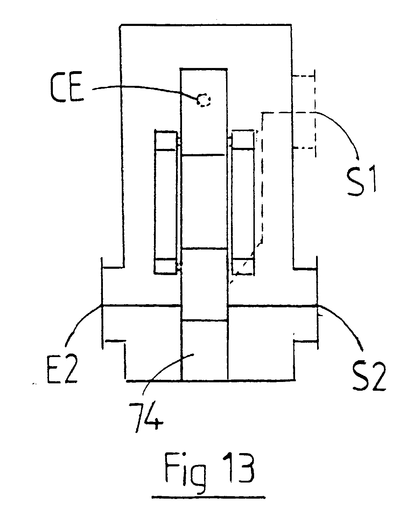

La figure 13 montre le disjoncteur 32 avec un mode de connexion linéaire E2, S2 ou h couché E2, S1 à la partie inférieure, et à connexion série CE amont.

Lorsque la tension nominale du réseau est inférieure à un seuil prédéterminé, par exemple 100kV, les condensateurs C1 et C2 de répartition de la tension, ne sont pas nécessaires. La distance d'isolement D3 entre le conducteur de raccordement et la chambre de coupure CH1, CH2 la plus proche dépend dans ce cas de la tension U' qui correspond sensiblement à U/1,5.

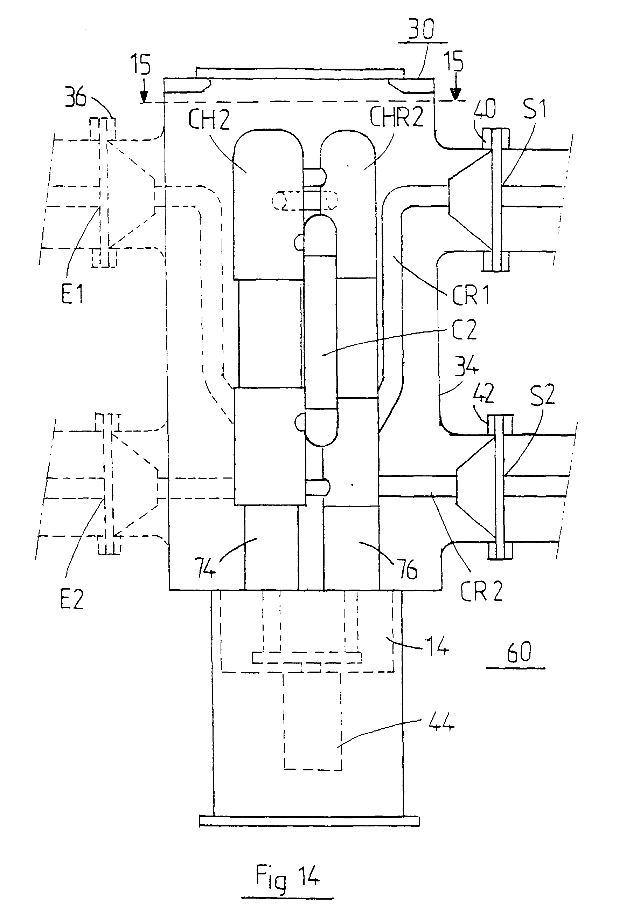

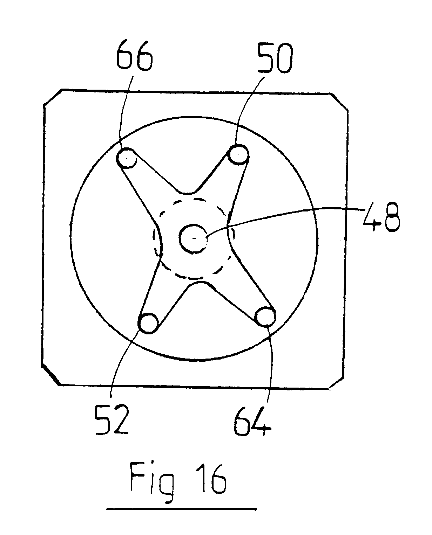

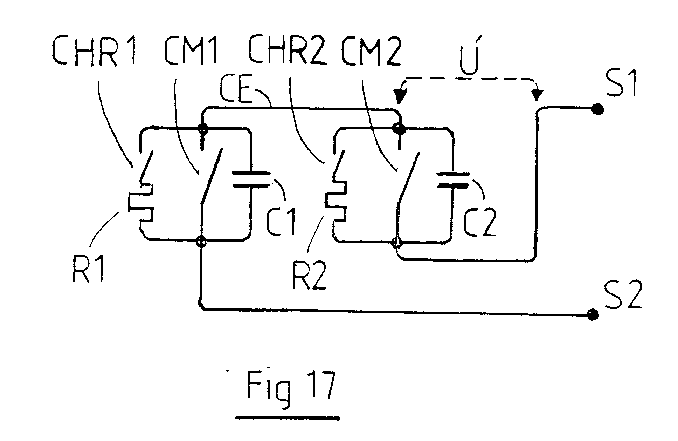

Le disjoncteur blindé 60 des figure 14 à 17 comporte la même cuve 34 métallique, et les mêmes éléments actifs du disjoncteur 32 des figures 7 et 8, avec en plus deux chambres auxiliaires CHR1, CHR2 à inséreurs de résistances R1, R2. Ces chambres auxiliaires CHR1, CHR2 sont connectées électriquement en parallèle aux bornes des condensateurs C1, C2, et permettent l'insertion des résistances R1, R2 pour éviter toute surtension lors des manoeuvres de fermeture du disjoncteur 60. Chaque chambre auxiliaire CHR1, CHR2 s'étend parallèlement à la chambre de coupure CH1, CH2 associée, et est séparée du conducteur de raccordement CR1 à CR8 le plus proche par une distance d'isolement D3, laquelle est inférieure à la distance de séparation D1 entre la chambre de coupure CH2 et la chambre auxiliaire CHR1.

Le mécanisme de commande 14 comporte un palonnier 62 actionné par un vérin 44, et accouplé à une première paire de bielles 50, 52 d'actionnement des contacts mobiles CM1, CM2, des chambres de coupure CH1, CH2, et à une deuxième paire de bielles 64,66 de commande des contacts inséreurs des chambres auxiliaires CHR1, CHR2.

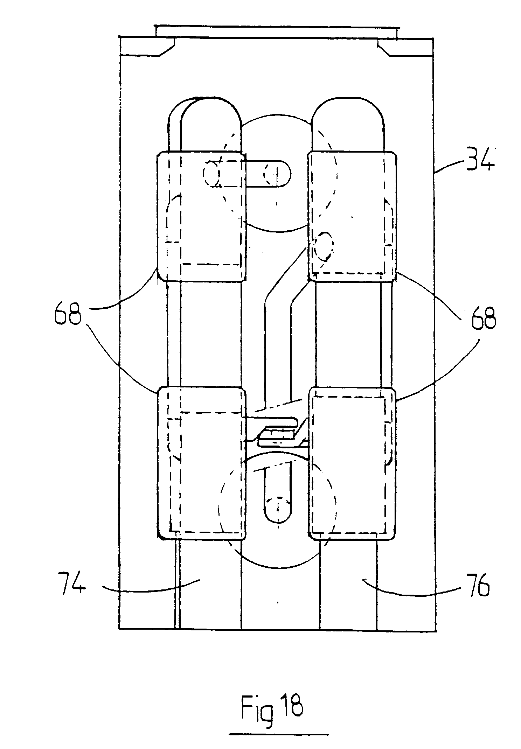

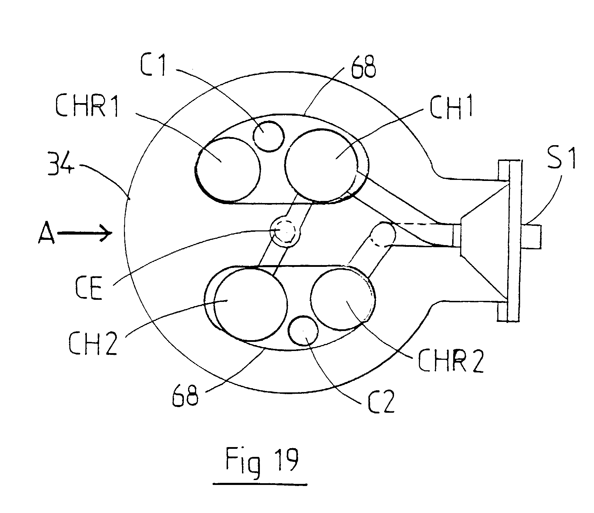

En référence aux figures 18 et 19, le disjoncteur 60 est équipé de capots pare- effluves 68 entourant chaque groupe de chambre de coupure CH1, CH2, condensateur C1, C2 et chambre auxiliaire CHR1, CHR2 pour améliorer la répartition du champ électrique entre les deux groupes connectés entre eux par la connexion série CE aval.

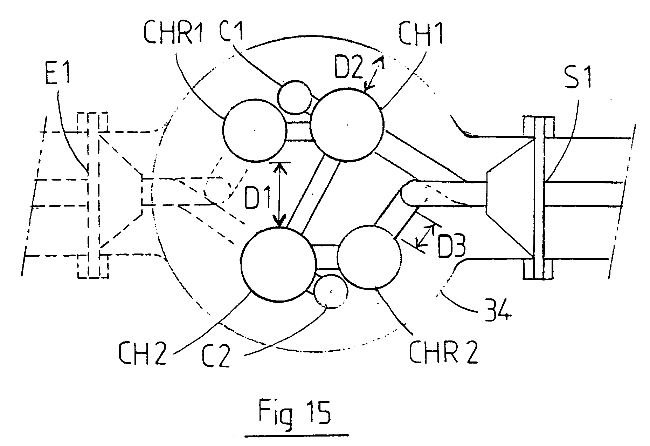

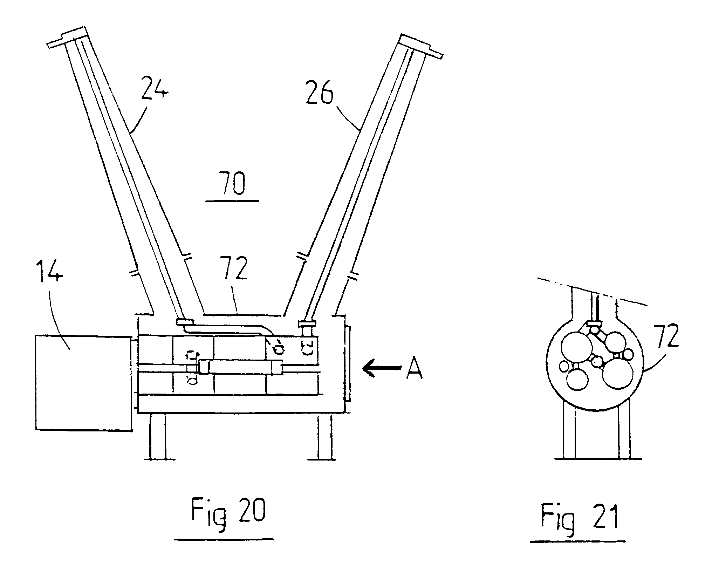

En référence aux figures 20 et 21, le disjoncteur 70 ouvert est du type décrit dans les figures 14 et 15, mais avec une disposition horizontale, et associé à deux traversées 24,26 pour le raccordement électrique. La cuve 72 repose directement sur le sol, et se trouve au potentiel de la masse.

Pour l'ensemble des disjoncteurs selon les figures 7 à 19, les chambres de coupure CH1, CH2 prennent appui individuellement sur des isolateurs supports 74 fixés à la base de l'enveloppe 30 métallique au potentiel de la masse. Il en est de même pour les chambres auxiliaires CHR1, CHR2 qui reposent sur des isolateurs supports 76 fixées à la base et à l'intérieur de l'enveloppe 30.

## Revendications

1. Disjoncteur à haute tension logé dans une enveloppe métallique étanche remplie de gaz isolant à rigidité diélectrique élevée, notamment de l'hexafluorure de soufre, ladite enveloppe (30) étant au potentiel de la masse, et renfermant deux chambres de coupure (CH1, CH2) connectés électriquement en série au niveau de chaque pôle par une connexion série (CE) interne,
caractérisé en ce que les deux chambres de coupure (CH1, CH2) sont disposées côte à côte en étant alignées le long d'un plan diamétral transversal dans lequel se trouve la connexion série (CE), et que l'enveloppe (30) cylindrique comporte une pluralité de brides (36, 38, 40, 42) avec diverses possibilités de raccordement électrique (E1, E2, S1, S2) au moyen de conducteurs de raccordement (CR1 à CR8) internes reliés aux bornes des chambres de coupure (CH1, CH2) à l'opposé de ladite liaison série (CE), les conducteurs de raccordement (CR1 à CR8) étant situés à leur sortie dans un plan médian longitudinal agencé entre les chambres de coupure (CH1, CH2).

2. Disjoncteur à haute tension selon la revendication 1, caractérisé en ce que l'un au moins des conducteurs de raccordement (CR1 à CR8) est disposé au voisinage d'un élément métallique soumis à la différence de potentiel entre les deux chambres de coupure (CH1, CH2), la distance d'isolement (D3) entre ledit conducteur et l'élément métallique étant inférieur à la distance (D1) séparant lesdites chambres de coupure (CH1, CH2).

3. Disjoncteur à haute tension selon la revendication 2, caractérisé en ce que l'élément métallique est formé par un condensateur (C1, C2) de répartition du potentiel, lequel est branché en parallèle aux bornes de la chambre de coupure (CH1, CH2) correspondante.

4. Disjoncteur à haute tension selon la revendication 2, caractérisé en ce que l'élément métallique est formé par une chambre auxiliaire (CHR1, CHR2) à insertion de résistances (R1, R2) lors de la fermeture, et connectée en parallèle aux bornes de la chambre de coupure (CH1, CH2) correspondante.

5. Disjoncteur à haute tension selon la revendication 1 ou 4, caractérisé en ce que les chambres de coupure (CH1, CH2) et/ou les chambres auxiliaires (CHR1, CHR2) prennent appui individuellement sur des isolateurs supports (74,76) fixés à la base et à l'intérieur de l'enveloppe (30).

6. Disjoncteur à haute tension selon l'une des revendications 1 à 5, caractérisé en ce que les deux chambres de coupure (CH1, CH2) sont disposées verticalement à l'intérieur de l'enveloppe (30) cylindrique.

7. Disjoncteur à haute tension selon l'une des revendications 1 à 5, caractérisé en ce que les deux chambres de coupure (CH1, CH2) sont disposées horizontalement à l'intérieur de l'enveloppe (30) cylindrique.

8. Disjoncteur à haute tension selon la revendication 7, caractérisé en ce que lesdits conducteurs de raccordement sont branchés à des traversées (24, 26) pour une connexion externe.
